# NEUE EUROPÄISCHE PATENTSCHRIFT

(11) **EP 1 870 612 B2**
(45) Veröffentlichungstag und Bekanntmachung des Hinweises auf die Entscheidung über den Einspruch: **08.08.2012**
(45) Hinweis auf die Patenterteilung: 29.07.2009
(21) Anmeldenummer: 07011922.7
(22) Anmeldetag: 19.06.2007
(51) Int. Cl.: F16F 1/32

(54) **Randschichtverbessern von Tellerfedern oder Wellfedern**
Surface layer improvement of disc springs or corrugated springs
Amélioration de la couche marginale de rondelles coniques ou de ressorts ondulés

(30) Priorität: 23.06.2006 DE 102006029316; 30.10.2006 DE 102006051683
(43) Veröffentlichungstag der Anmeldung: 26.12.2007
(73) Patentinhaber: Muhr und Bender KG, 57439 Attendorn (DE)
(72) Erfinder: Hesselmann, Bernfried, Dr.-Ing., 57482 Wenden (DE); Roth, Sven, 57586 Weitefeld (DE); Buchner, Peter, 57520 Neunkhausen (DE); Rinsdorf, Andreas, Dr.-Ing., 57258 Freudenberg (DE); Muhr, Thomas, Dr.-Ing., 57439 Attendorn (DE)
(74) Vertreter: Neumann, Ernst Dieter

(56) Entgegenhaltungen:
- EP-A1- 1 503 102
- EP-A1- 1 839 919
- EP-A2- 0 965 399
- WO-A1-00/20710
- WO-A2-01/64398
- DE-A1- 2 450 267
- DE-A1- 2 543 693
- DE-A1- 4 447 330
- DE-A1- 10 333 285
- DE-A1- 10 334 470
- DE-A1- 10 334 470
- DE-A1- 19 805 797
- DE-B- 1 239 893
- DE-B- 1 239 893
- JP-A- 2000 027 915
- JP-A- 2004 144 132
- US-A- 4 135 283
- US-A- 4 453 392
- US-A- 4 974 434
- US-A1- 0 155 203
- US-A1- 0 247 385
- ECOROLL WERKZEUGTECHNIK: 'Werkzeugtechnologie Oberflächenveredelung' ECOROLL 01 Mai 2006, Seiten 1 - 98
- MANFRED MEISSNER HANS JÜRGEN SCHORCHT: 'grundlagen,wekstoffe,berechnung,gestaltung und rechnereinsatz' METALLFEDERN 01 Januar 2007, Seite 36
- 9TH INTERNATIONAL CONFEENCE AND EXHIBITION: 'shot peening' SHOT PEENING 06 September 2005, Seiten 436 - 441
- PROF.WAGNER: 'shot peening' SHOT PEENING 01 Januar 2003, WILEY-VCH VERLAG GMBH & COKGA,

## Beschreibung

Die Erfindung betrifft ein Verfahren zur Herstellung von Tellerfedern oder Wellfedern, an denen Oberflächenbereiche, die bei Belastung der Feder durch Zugspannungen beansprucht werden, mit einer Druckeigenspannung in der Randschicht versehen werden. Die Erfindung erfaßt weiterhin Tellerfedern oder Wellfedern, an denen Oberflächenbereiche, die bei Belastung der Feder durch Zugspannungen beansprucht werden, mit einer Druckeigenspannung in der Randschicht versehen sind.

Mit dem Begriff Randschicht wird hierbei ein von der Oberfläche ausgehender Tiefenbereich mit am fertigen Bauteil erzeugter Druckeigenspannung bezeichnet. Durch eine Druckeigenspannung in der Randschicht wird eine Rißbildung und das Rißwachstum von der Oberfläche aus behindert, was zu einer erhöhten Dauerfestigkeit des Bauteils führt.

Die genannten Tellerfedern oder Wellfedern haben geschlossen kreisringförmige Form, wobei sie überwiegend gleichmäßige Materialdicke aufweisen.

Tellerfedern haben bei äußerst kurzer Baulänge üblicherweise degressive Kennlinien. Sie erbringen hohe Federkräfte bereits bei geringen Federwegen. Tellerfedern werden häufig als Federsäulen mit übereinstimmender oder wechselnder Konuslage, aber auch als Einzelelemente verwendet. Sie können an ihrer Innenkante und/oder ihrer Außenkante geschlitzt oder gezahnt sein.

Wellfedern sind zumeist relativ zu einer Ebene gewellte Federelemente oder relativ zu einer Konusfläche gewellte Federelemente, die lineare oder progressiv verlaufende Kennlinien aufweisen. Sie werden häufig als Dämpfungsfedern in Lamellenkupplungen von Automatikgetrieben eingesetzt.

Beide Federarten werden im Einsatzfall auch statisch, zumeist jedoch dynamisch beansprucht.

Die Herstellung von Tellerfedern und Wellfedern erfolgt bei Federn mit geringerer Dicke durch Ausstanzen von Federplatinen aus einem kaltgewalzten Flachband. Dies geschieht entweder durch Normalstanzen oder durch Feinschneiden, letzteres um eine bessere Qualität der Schnittkante zu erzielen. Nach dem Ausstanzen der Federplatinen wird üblicherweise der beim Normalstanzen bzw. beim Feinschneiden entstehende Grat durch Gleitschleifen entfernt.

Eine Umformung der Federplatinen erfolgt im Anschluß daran durch Warm- oder Kaltumformung. Zur Erzielung der Federeigenschaften werden die Federplatinen anschließend vergütet. Durch ein Kugelstrahlen nach dem Vergütungsprozeß kann eine Druckeigenspannung in der Randschicht erzeugt werden und dadurch die Lebensdauer der Tellerfedern oder Wellfedern für eine dynamische Belastung verbessert werden.

Bei Belastung der Tellerfedern oder Wellfedern wird die Druckeigenspannung durch in Umfangsrichtung des Federrings wirkende Zugspannungen reduziert oder abgebaut.

Tellerfedern und Wellfedern werden in zahlreichen Anwendungen im Maschinen- und Anlagenbau verwendet. Ein weites Einsatzgebiet ergibt sich insbesondere in den Lamellenkupplungen von Automatikgetrieben.

Aufgrund hoher Zugspannungen bei Belastung können oftmals bei hohen Kräften und begrenzten Einbauräumen nicht alle Forderungen an die Lebensdauer von Tellerfedern und Wellfedern im Hinblick auf eine statische oder dynamische Beanspruchung erfüllt werden. Dies gilt auch dann, wenn durch ein Kugelstrahlverfahren eine Druckeigenspannung in der Randschicht der insbesondere auf Zugspannungen belasteten Oberflächenbereiche an der entspannten Tellerfeder erzeugt worden ist.

Es ist daher häufig erforderlich, Tellerfedern und Wellfedern in Mehrfachanordnung einzusetzen, um die Beanspruchung der einzelnen Tellerfedern und Wellfedern niedrig zu halten und damit die geforderte Lastwechselzahl im Einsatz zu erfüllen.

Verbunden damit ist eine erhöhte Anzahl an Tellerfedern oder Wellfedern und ein insgesamt vergrößerter Einbauraum. Die erhöhte Anzahl an Tellerfedern oder Wellfedern bedingt höhere Kosten; gleichzeitig resultieren aus dem erforderlichen größeren Einbauraum höhere Aggregatkosten.

In der DE 103 34 470 A1 sind Tellerfedern beschrieben, bei denen bei Belastung durch Zugspannungen belastete Oberflächenbereiche durch Kugelstrahlen oder durch Wärmebehandlung mit einer erhöhten Druckeigenspannung in der Randschicht versehen sind.

Aus der DE 44 44 649 A1 sind Tellerfedern bekannt, die aus Bandmaterial gestanzt sind, danach gehärtet und aufgestellt werden, danach angelassen und kugelgestrahlt werden, wobei anschließend noch ein sogenanntes Setzen erfolgt. Bezüglich des Kugelstrahlens wird dabei vorgeschlagen, die Strahlparameter auf der Federoberseite und auf der Federunterseite unterschiedlich zu wählen, um die Kraft-Weg-Charakteristik der Tellerfeder gezielt zu beeinflussen.

Der vorliegenden Erfindung liegt die Aufgabe zugrunde, ein Verfahren zur Herstellung von Tellerfedern und Wellfedern vorzuschlagen, mit dem die statische und dynamische Beanspruchbarkeit der entsprechenden Erzeugnisse signifikant erhöht werden kann, bzw. Tellerfedern und Wellfedern bereitzustellen, die eine entsprechend erhöhte statische und dynamische Beanspruchbarkeit aufweisen.

Die Lösung besteht in einem Verfahren zur Herstellung von Tellerfedern oder Wellfedern mit den Merkmalen des Anspruchs 1. Hierbei ist insbesondere vorgesehen, daß die genannten Oberflächenbereiche in Kreisbewegungen der Kugel oder der Walze um die Achse der Feder relativ zur Feder abrollend verdichtet werden. Gemäß der Erfindung ist vorgesehen, daß die genannten Oberflächenbereiche abrollend verdichtet werden, während Zugspannungen in den genannten Oberflächenbereichen aufgezwungen werden und nach einem Vergüten der Feder und nach einem Verdichten mittels Kugelstrahlen.

Soweit der Begriff Verdichten verwendet wird, soll dies anschaulich die bleibenden Änderungen der Spannungszustände beschreiben. Richtig ist allerdings, daß eine elastische und gegebenenfalls plastische Umformung unter Volumenkonstanz des Materials bei den angegebenen Verfahren erfolgt.

Mit der hiermit beschriebenen Verfahrensführung werden zum einen höhere Druckeigenspannungen aufgebaut, als beim bisherigen Kugelstrahlverfahren; zum anderen wird durch die beschriebene Verfahrensführung auch die Möglichkeit eröffnet, das Maximum der Druckeigenspannung in tiefere Bereiche der Randschicht zu verlagern. Hiermit wird eine Randschichtqualität erzeugt, die auch bei eventuell vorhandenen Einschlüssen oder Fehlerstellen des Materials zu erhöhten Lebensdauerwerten der Federn bei statischer und dynamischer Belastung führen.

Hierbei wird insbesondere vorgeschlagen, daß die genannten Oberflächenbereiche bei zumindest elastisch verformbarer, insbesondere bei flachgedrückter Feder abrollend verdichtet werden. Es ist jedoch auch eine von einem Flachdrücken in die Planlage abweichende, geringere oder bei einer Tellerfeder eine über die Planlage hinausgehende stärkere Verformung oder eine jeweils nur örtliche Verformung im Bereich des Verdichtens möglich. Die zeitweilige Verformung während des Verdichtens kann auch über die Streckgrenze hinausgehen, daß die genannten Oberflächenbereiche plastisch verformt werden.

Mit dieser Verfahrensführung lassen sich sowohl die Maximalwerte für die Druckeigenspannung in der Randschicht als auch die Tiefenlage des entsprechenden Maximums der Druckeigenspannung in der Randschicht signifikant erhöhen, wie später noch im einzelnen dargestellt wird.

Neben der Verbesserung der Werte für die Druckeigenspannung liegt ein besonderer Vorteil in der gleichzeitigen Glättung der behandelten Oberflächenbereiche, wodurch die Gefahr der Rißbildung ausgehend von den Oberflächen reduziert wird.

Sofern nicht durch Festwalzen bzw. Festrollen (Verdichtungswalzen, Verdichtungsrollen) behandelte Oberflächen auf Teilbereiche der Oberflächen begrenzt werden, ist es günstig, die übrigen Bereiche durch das bekannte Kugelstrahlen zu verdichten. Hierbei erfolgt das Oberflächenverdichten nach dem Kugelstrahlverfahren, damit der vorstehend beschriebene Glättungseffekt durch das Rollverdichten in den höchstbelasteten Bereichen der Tellerfedern oder Wellfedern erhalten bleibt.

Das abrollende Verdichten erfolgt in günstiger Weise nach dem Vergüten der Feder, damit die Ergebnisse des Festwalzens bzw. Festrollens und/oder des Kugelstrahlens nicht durch eine anschließende Wärmebehandlung teilweise wieder beeinträchtigt werden.

Nach einer günstigen Verfahrensführung erfolgt das abrollende Verdichten bei einer erhöhten Temperatur der Feder von mehr als 180°C, insbesondere bei etwa 200°C.

Die Erfindung umfaßt weiterhin Tellerfedern oder Wellfedern, an denen Oberflächenbereiche, die bei Belastung der Feder durch Zugspannungen beansprucht werden, mit einer Druckeigenspannung in der Randschicht versehen sind, wobei das Maximum der Druckeigenspannung in der Randschicht von abrollend verdichteten Oberflächenbereiche mindestens 850 MPa beträgt, wobei die Tellerfeder oder Wellfeder nach einem der erfindungsgemäßen Verfahren hergestellt ist. In bevorzugter Ausführung ist hierbei vorgesehen, daß die Druckeigenspannung in der Randschicht der genannten Oberflächenbereiche in einer Tiefe von 200 µm mindestens 500 MPa beträgt.

Ausgehend von der an sich bekannten Gegebenheit, daß die Qualitätsverbesserung durch eine Druckeigenspannung insbesondere die Oberflächenbereiche erfassen muß, die bei Belastung unter Zugspannungen in der Randschicht gesetzt werden, ist insbesondere vorgesehen, daß zumindest eine der inneren und äußeren Ringkanten mit einer Druckeigenspannung in der Randschicht versehen ist, oder daß bei einer Tellerfeder zumindest ein Randbereich der innenkonischen Unterseite mit einer Druckeigenspannung in der Randschicht versehen sind, bzw. daß bei einer Wellfeder zumindest jeweils ein Randbereich der gewellten oberen und unteren Oberflächen mit einer Druckeigenspannung in der Randschicht versehen sind. Die Tellerfedern können hierbei so gestaltet sein, daß die Tellerfeder an ihrer Innenkante geschlitzt bzw. gezahnt ist und/oder daß die Tellerfeder an ihrer Außenkante geschlitzt bzw. gezahnt ist. An den Wellfedern kann vorgesehen sein, daß die Wellung der Wellfeder von einer Tellerung, d. h. von einer Konizität überlagert ist. Darüber hinaus kann die Wellung auch über dem Umfang so variieren, daß Minima und Maxima unterschiedlicher Größe und Höhe in periodischer Abfolge vorhanden sind.

Bevorzugte Ausführungsbeispiele der Erfindung sind in den Zeichnungen dargestellt und werden nachstehend beschrieben.
- Figur 1: zeigt eine erfindungsgemäße Tellerfeder eines ersten Typs beim abrollenden Verdichten in einer ersten Ausführung;
- Figur 2: zeigt eine erfindungsgemäße Tellerfeder eines ersten Typs beim abrollenden Verdichten in einer zweiten Ausführung;
- Figur 3: zeigt eine erfindungsgemäße Tellerfeder eines ersten Typs beim abrollenden Verdichten in einer dritten Ausführung;
- Figur 4: zeigt eine erfindungsgemäße Tellerfeder eines ersten Typs beim abrollenden Verdichten in einer vierten Ausführung;
- Figur 5: zeigt eine erfindungsgemäße Tellerfeder eines ersten Typs beim abrollenden Verdichten in einer fünften Ausführung;
- Figur 6: zeigt eine erfindungsgemäße Tellerfeder eines zweiten Typs beim abrollenden Verdichten in einer sechsten Ausführung;
- Figur 7: zeigt eine erfindungsgemäße Tellerfeder eines zweiten Typs beim abrollenden Verdichten in einer siebten Ausführung;
- Figur 8: zeigt eine erfindungsgemäße Tellerfeder eines dritten Typs beim abrollenden Verdichten in einer achten Ausführung;
- Figur 9: zeigt eine erfindungsgemäße Wellfeder beim anrollenden Verdichten in einer ersten Ausführung;
- Figur 10: zeigt eine erfindungsgemäße Wellfeder beim anrollenden Verdichten in einer zweiten Ausführung;
- Figur 11: zeigt eine erfindungsgemäße Wellfeder beim anrollenden Verdichten in einer dritten Ausführung;
- Figur 12: zeigt eine Vorrichtung zur Durchführung des erfindungsgemäßen Verfahrens in einer ersten Ausführung in 3D-Darstellung;
- Figur 13: zeigt die Vorrichtung nach Figur 12 in einem Axialschnitt;
- Figur 14: zeigt eine Vorrichtung zur Durchführung des erfindungsgemäßen Verfahrens in einer zweiten Ausführung in 3D-Darstellung;
- Figur 15: zeigt die Vorrichtung nach Figur 14 im Längsschnitt;
- Figur 16: zeigt den Spannungsverlauf in der Randschicht einer erfindungsgemäß hergestellten Tellerfeder oder Wellfeder im Vergleich mit dem Spannungsverlauf in einer kugelgestrahlten Randschicht;
- Figur 17: zeigt den Spannungsverlauf in der Randschicht einer erfindungsgemäß hergestellten Tellerfeder oder Wellfeder im Vergleich für zwei verschiedene Verfahrensführungen.

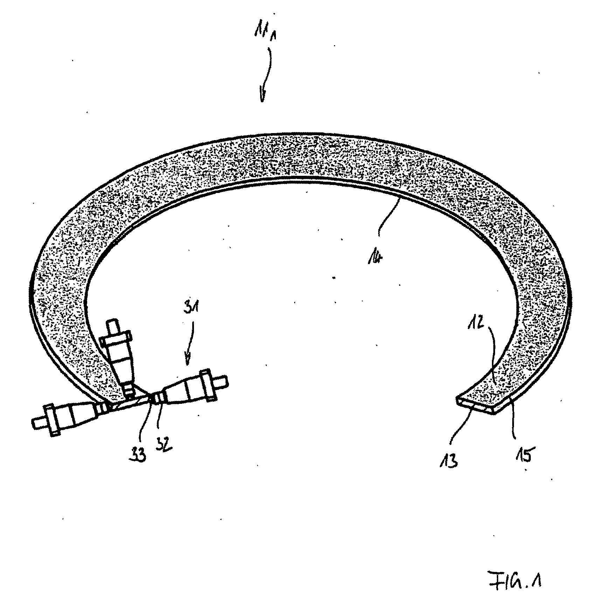

Die Figuren 1 bis 5 werden nachstehend zunächst gemeinsam beschrieben. Es ist jeweils eine Tellerfeder 11₁ in 3D-Darstellung gezeigt, an der ein vorne liegender Teilbereich weggeschnitten ist. Die Tellerfeder ist insgesamt ein vollständiger Kreisring. Die Tellerung ist derart, daß die Spitze des Öffnungskonus der zueinander parallelen Ober- und Unterseite unterhalb des Federringes liegt. Hierbei wird die obenliegende Seite als Unterseite 12 und die untenliegende Seite als Oberseite 13 bezeichnet. Weiterhin werden eine innere Ringkante 14 und eine äußere Ringkante 15 unterschieden. Im Querschnitt ist die Tellerfeder 11₁ rechtwinklig, d.h. sie besteht aus Blech von im wesentlichen gleichmäßiger Dicke. Die von abrollender Verdichtung erfaßten Oberflächenbereiche sind als Grauflächen angelegt. In den Figuren 1 bis 5 ist jeweils ein Rollwerkzeug 31 in verschiedenen Positionen dargestellt, wobei die verschiedenen Positionen die abrollende Verdichtung verschiedener Oberflächenbereiche symbolisieren sollen. Das Werkzeug 31 wird in einer nicht dargestellten Werkzeughalterung eingespannt, die numerisch gesteuert insbesondere um drei Achsen bewegt werden kann. Das Werkzeug 31 hat einen Kugelhalter 32, der hydrostatisch abgestützt gegenüber dem Werkzeug 31 verschiebbar ist. Der Kugelhalter 32 trägt an seinem vorderen Ende eine frei drehbare Kugel 33, beispielsweise aus Hartkeramik. Mit in der Darstellung nicht gezeigten Mitteln kann die Tellerfeder 11₁ aufgespannt werden und bei über die Oberflächen der Tellerfeder vorgeschobenem Werkzeug 31 drehend um ihre Achse angetrieben werden. Hierbei wird ein Anlagedruck der Kugel 33 erzeugt, der die Oberflächen plastisch umformt und dabei eine Druckeigenspannung in der Randschicht erzeugt. Die jeweils vorn Festwalzen erfaßten Oberflächen sind in den Figuren dunkel angelegt, wobei zur Verdeutlichung das Werkzeug 31 jeweils in einer Position an den behandelten Oberflächen dargestellt ist.

In Figur 1 wird auf diese Weise die Unterseite 12, die innere Ringkante 14 und die äußere Ringkante 15 abrollend verdichtet.

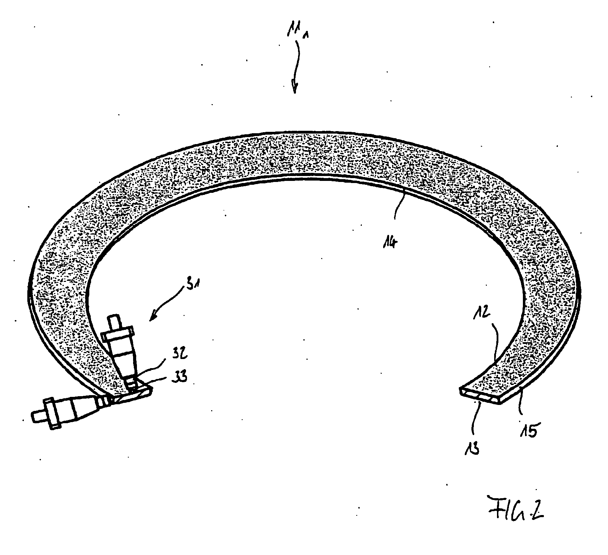

In Figur 2 wird auf diese Weise die Unterseite 12 und die äußere Ringkante 15 abrollend verdichtet.

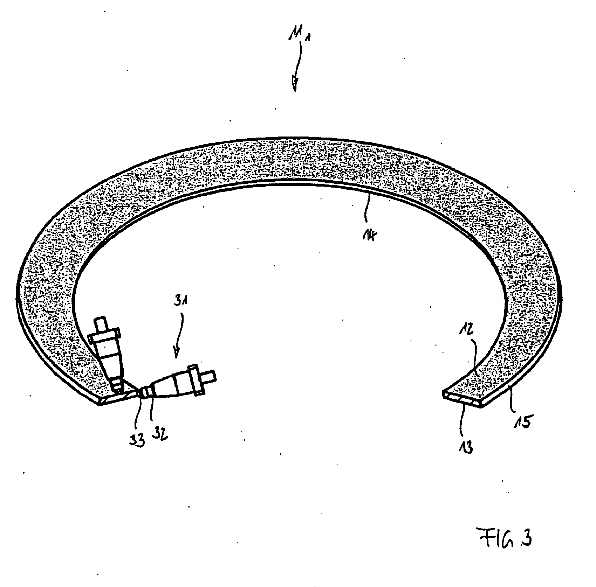

In Figur 3 wird auf diese Weise die Unterseite 12 und die innere Ringkante 14 abrollend verdichtet.

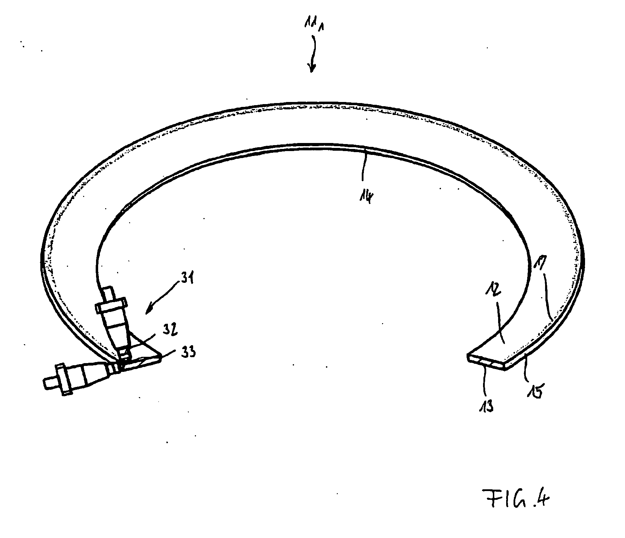

In Figur 4 wird auf diese Weise die äußere Ringkante 15 und ein an diese anschliessender schmaler Randbereich 17 der Unterseite 12 abrollend verdichtet.

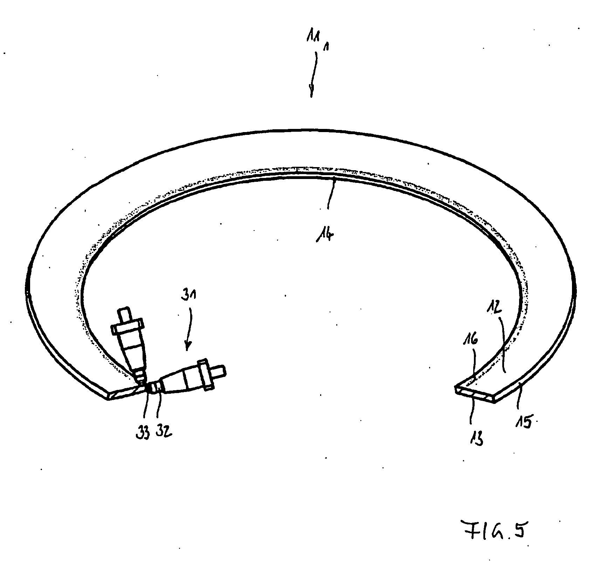

In Figur 5 wird auf diese Weise die innere Ringkante 14 und ein an diese anschließender schmaler Randbereich 16 der Unterseite 12 abrollend verdichtet.

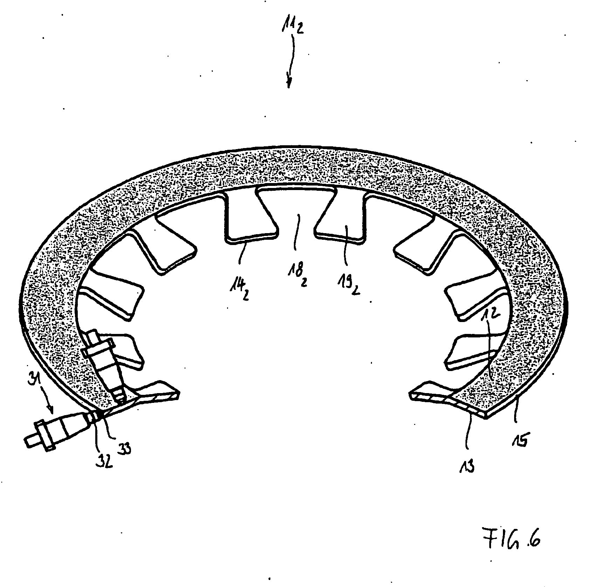

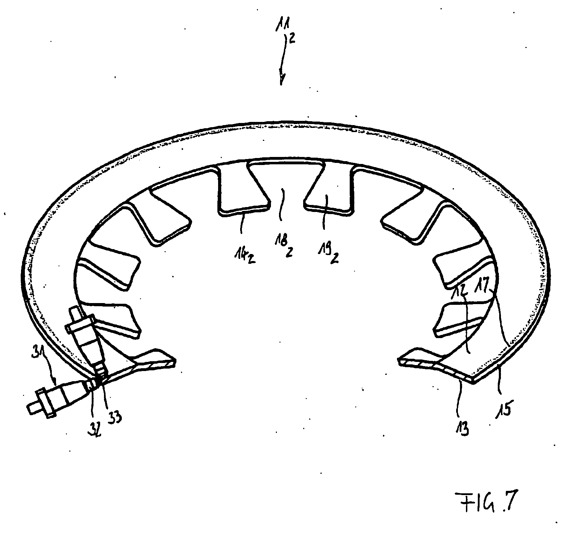

Die Figuren 6 und 7 werden zunächst gemeinsam beschrieben. Es ist eine Tellerfeder 11₂ in gleicher Darstellungsweise wie in den Figuren 1 bis 5 dargestellt, wobei die Tellerfeder 11₂ jedoch innen geschlitzt ist, so daß eine glatte äußere Ringkante 15 wie zuvor vorhanden ist, jedoch auf der Innenseite trapezförmige Schlitze 18₂ und trapezförmige Laschen 19₂ den Verlauf der inneren Ringkante 14₂ bestimmen. Die Laschen 19₂ werden von der Randschichtverdichtung nicht erfaßt.

In Figur 6 erstreckt sich die abrollende Verdichtung auf die Unterseite 12 und die außenliegende Ringkante 15.

In Figur 7 erstreckt sich die abrollende Verdichtung auf die äußere Ringkante 15 und einen schmalen an diesen anschließenden Randbereich 17 der Unterseite 12.

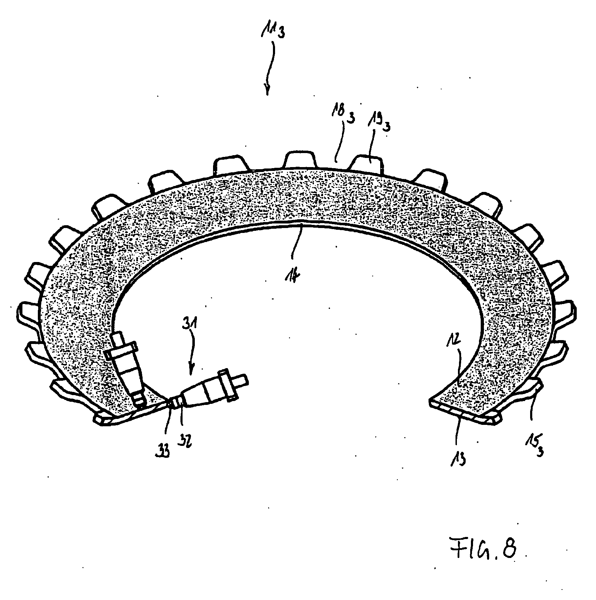

In Figur 8 ist eine Tellerfeder 11₃ in grundsätzlich gleicher Darstellung wie in den Figuren 1 bis 5 gezeigt, wobei die Tellerfeder 11₃ jedoch außen geschlitzt ist, so daß nur eine glatte umlaufende innere Ringkante 14 vorhanden ist, während die äußere Ringkante 15₃ von trapezförmigen Schlitzen 18₃ und Laschen 19₃ definiert wird. Die abrollende Verdichtung erstreckt sich nicht auf die Laschen 19₃. Stattdessen wird von der abrollenden Verdichtung die Unterseite 12 und die innere Ringkante 14 der Tellerfeder 11₃ erfaßt.

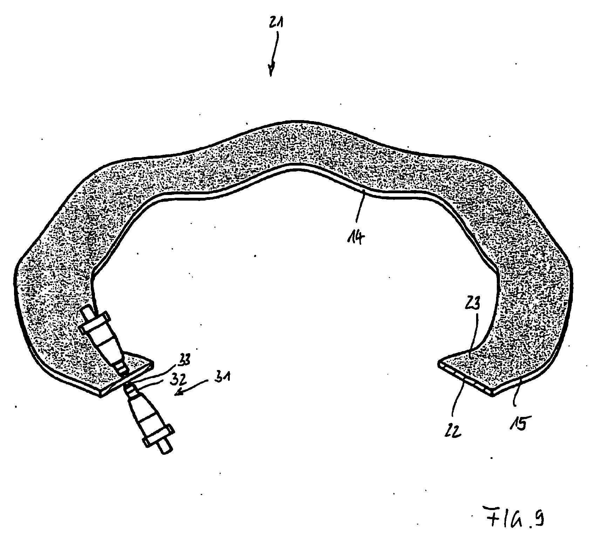

Die Figuren 9 bis 11 werden zunächst gemeinsam beschrieben. Es ist jeweils eine Wellfeder 21 in 3D-Darstellung gezeigt, von der ein vorneliegender Teilbereich weggeschnitten ist. Die Wellfeder ist insgesamt ein vollständiger Kreisring. Die Wellfeder hat über dem Umfang definitionsgemäß einen Wellenverlauf, wobei sie zueinander parallele Ober- und Unterseiten erkennen läßt. Im einzelnen sind eine Unterseite 22, eine Oberseite 23, eine innere Ringkante 14 und eine äußere Ringkante 15 bezeichnet. Im Querschnitt ist die Wellfeder 21 rechtwinklig, d.h. sie besteht aus Blech von im wesentlichen gleichmäßiger Dicke. Eine Tellerung der Wellfeder 21 ist nicht erkennbar, sie kann aber zur Wellung als ergänzendes Gestaltungskriterium hinzutreten. Das Werkzeug 31 wird in einer nicht dargestellten Werkzeughalterung eingespannt, die numerisch gesteuert insbesondere um drei Achsen bewegt werden kann. Das Werkzeug 31 hat einen Kugelhalter 32, der hydrostatisch abgestützt gegenüber dem Werkzeug 31 verschiebbar ist. Der Kugelhalter 32 trägt an seinem vorderen Ende eine frei drehbare Kugel 33, beispielsweise aus Hartkeramik. Mit in der Darstellung nicht gezeigten Mitteln kann die Wellfeder 21 aufgespannt werden und bei über die Oberflächen der Tellerfeder vorgeschobenem Werkzeug 31 drehend um ihre Achse angetrieben werden. Hierbei wird ein Anlagedruck der Kugel 33 erzeugt, der die Oberflächen plastisch umformt und dabei eine Druckeigenspannung in der Randschicht erzeugt. Die jeweils vom Festwalzen erfaßten Oberflächen sind in den Figuren dunkel angelegt, wobei zur Verdeutlichung das Werkzeug 31 jeweils in einer Position an den behandelten Oberflächen dargestellt ist.

In Figur 9 wird die Unterseite 22 und die Oberseite 23 von der abrollenden Verdichtung erfaßt.

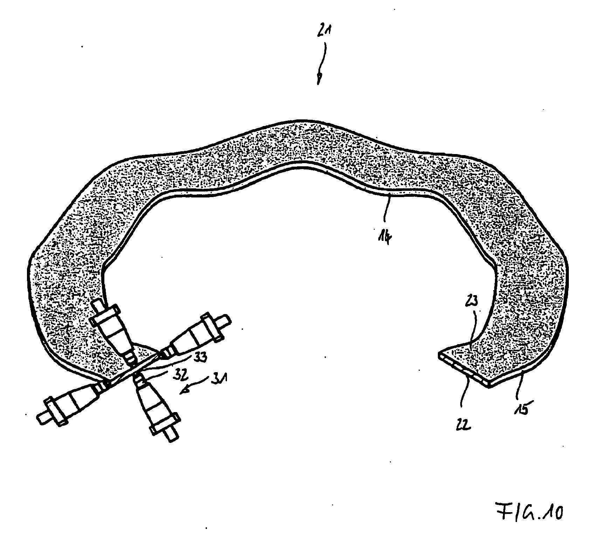

In Figur 10 werden die Unterseite 22, die Oberseite 23 sowie die inneren und äußeren Ringkanten 14, 15 von der abrollenden Verdichtung erfaßt.

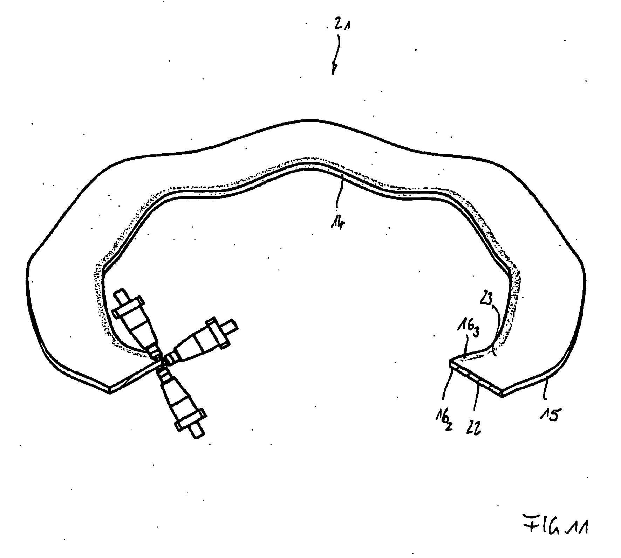

In Figur 11 wird die innere Ringkante 14 und jeweils zwei begrenzte Randbereiche 16₂, 16₃ im Anschluß an die innere Ringkante 14 auf der Unterseite 22 bzw. der Oberseite 23 von der abrollenden Verdichtung erfaßt.

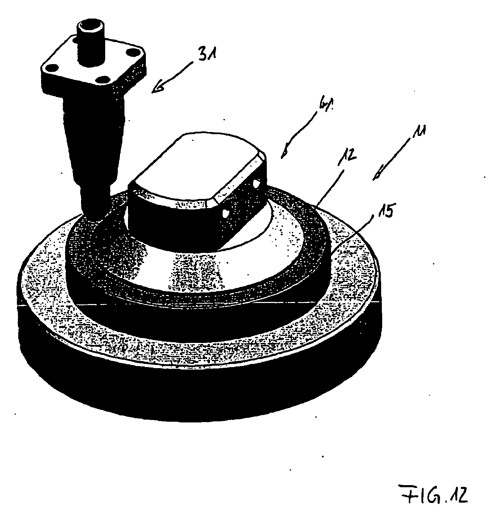

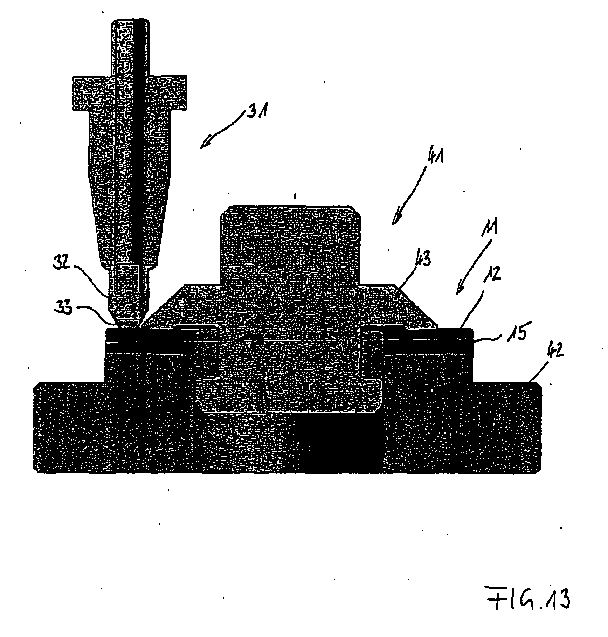

Die Figuren 12 und 13 werden nachstehend gemeinsam beschrieben. Es ist eine zweiteilige Halterung 41 gezeigt, die einen Auflagerring 42 für eine Teller- oder Wellfeder und einen Spanneinsatz 43 umfaßt, der auf die Teller- oder Wellfeder einwirkt und bajonettartig gegenüber dem Auflagerring 42 verspannt werden kann. Im Zustand der Verspannung von Auflagerring 42 und Spanneinsatz ist die Teller- oder Wellfeder in die Planlage flachgedrückt, wobei in dieser Ausführung der Halterung ein äußerer Teil der Unterseite und die äußere Ringkante der Teller- oder Wellfeder für das Rollwerkzeug 31 frei zugänglich sind. Bei drehend angetriebener Halterung 41 kann das mit Druck aufgesetzte Rollwerkzeug 31 in Radialrichtung über die Unterseite 12, 22 und in Axialrichtung über die äußere Ringkante 15 bewegt werden.

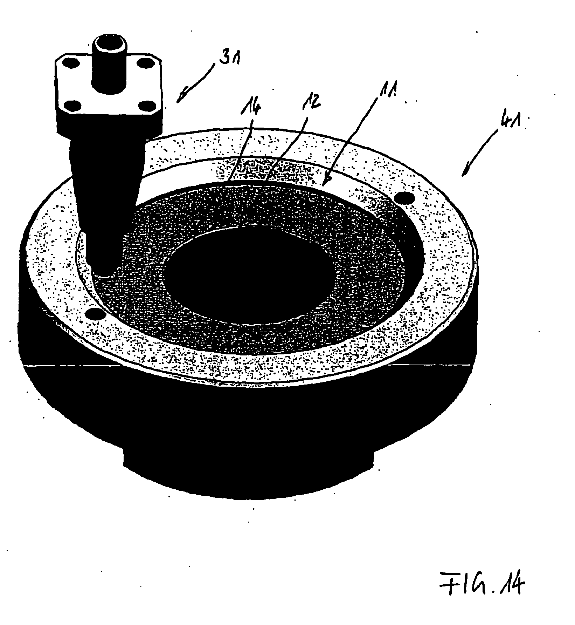

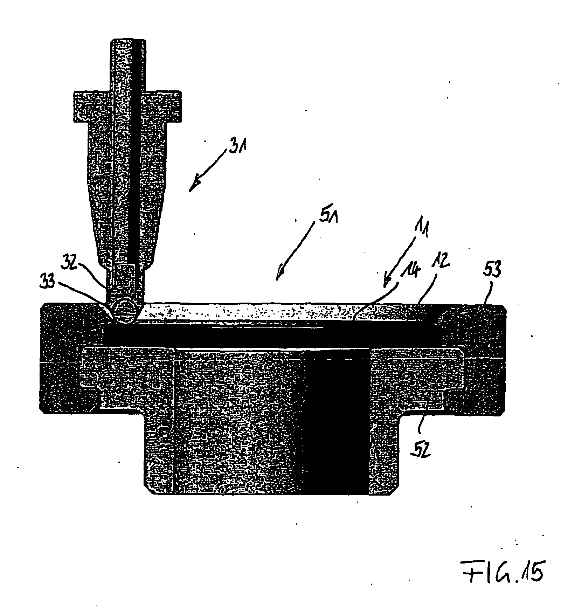

Die Figuren 14 und 15 werden nachstehend gemeinsam beschrieben. Es ist eine zweiteilige Halterung 51 gezeigt, die einen Auflagering 52 für eine Teller- oder Wellfeder und einen Spannaufsatz 53 umfaßt, der auf die Teller- oder Wellfeder einwirkt und bajonettartig gegenüber dem Auflagerring verspannt werden kann. Im Zustand der Verspannung ist die Teller- oder Wellfeder flachgedrückt, wobei in dieser Ausführung der Halterung ein innerer Teil der Unterseite und die innere Ringkante 14 für das Rollwerkzeug 31 frei zugänglich sind. Bei drehend angetriebener Halterung kann das mit Druck aufgesetzte Rollwerkzeug 31 in Radialrichtung über die Unterseite und in Axialrichtung über die innere Ringkante 15 bewegt werden.

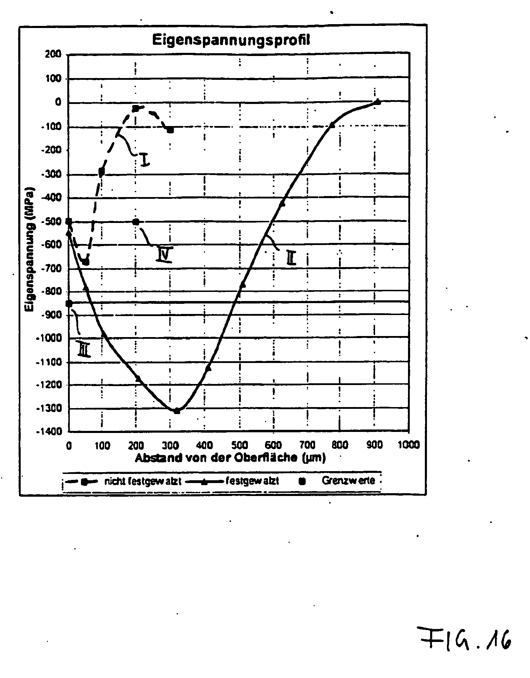

In Figur 16 ist der Spannungsverlauf in der Randschicht eines erfindungsgemäß behandelten Oberflächenbereiches in MPa über dem Abstand von der Oberfläche in µm im Vergleich mit einem Spannungsverlauf in der Randschicht einer Teller- oder Wellfeder nach dem Stand der Technik dargestellt, wobei eine obere Kurve I das Ergebnis einer Verfahrensführung nach dem Stand der Technik nach einem Kugelstrahlen der Teller- oder Wellfeder und die untere Kurve II das Ergebnis einer erfindungsgemäßen Verfahrensführung unter Einspannen der Tellerfeder oder Wellfeder, d.h. bei abrollendem Verdichten einer in diesem Fall in die Planlage gedrückten Feder darstellt. Die Druckeigenspannungswerte der unteren Kurve II sind deutlich höher und reichen tiefer in die Randschicht hinein als sie bei der Kurve I nach dem einem Kugelstrahlverfahren zu erzielen sind.

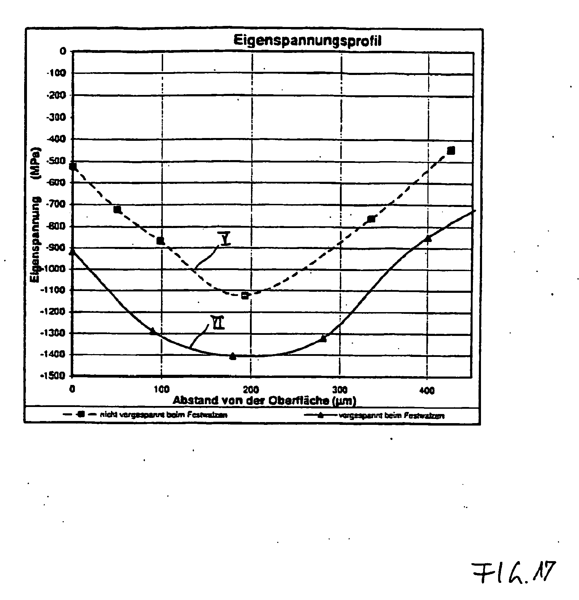

In Figur 17 ist der Spannungsverlauf in der Randschicht eines erfindungsgemäß durch abrollendes Verdichten behandelten Oberflächenbereiches in MPa über dem Abstand von der Oberfläche in µm in zwei Varianten dargestellt, wobei eine obere Kurve V das Ergebnis einer erfindungsgemäßen Verfahrensführung ohne Einspannen der Teller- oder Wellfeder, d.h. bei abrollendem Verdichten bei einer Abstützung der belastungsfreien Eigengestalt der Feder, und die untere Kurve VI das Ergebnis einer erfindungsgemäßen Verfahrensführung unter Einspannen der Tellerfeder oder Wellfeder, d.h. bei abrollendem Verdichten einer in diesem Fall in die Planlage gedrückten Feder darstellt. Die Druckeigenspannungswerte der oberen Kurve sind deutlich höher und reichen tiefer in die Randschicht hinein als sie bei einem Kugelstrahlverfahren zu erzielen sind. Die Druckeigenspannungswerte der unteren Kurve sind demgegenüber nochmals verbessert. Es ist weiterhin in der Graphik der beanspruchte Mindestwert für das Maximum der Druckeigenspannung mit III bezeichnet und der beanspruchte Mindestwert für die Druckeigenspannung in einer Tiefe von 200 µm mit IV bezeichnet.

### Bezugszeichenliste

- 11: Tellerfeder
- 12: Unterseite
- 13: Oberseite
- 14: Innenkante
- 15: Außenkante
- 16: Randbereich
- 17: Randbereich
- 18: Schlitz
- 19: Lasche

- 21: Wellfeder
- 22: Unterseite
- 23: Oberseite

- 31: Rollwerkzeug
- 32: Kugelhalter
- 33: Kugel

- 41: Halterung
- 42: Halterung
- 43: Spanneinsatz

- 51: Auflagerring
- 52: Auflagerring
- 53: Spannaufsatz

## Patentansprüche

1. Verfahren zur Herstellung von Tellerfedern oder Wellfedern, an denen Oberflächenbereiche, die bei Belastung der Feder durch Zugspannungen beansprucht werden, mit einer Druckeigenspannung in der Randschicht versehen werden,
**dadurch gekennzeichnet,**
**daß** die genannten Oberflächenbereiche mit einer Kugel oder einer Walze abrollend verdichtet werden, während Zugspannungen in den genannten Oberflächenbereichen aufgezwungen werden,
wobei das abrollende Verdichten nach einem Vergüten und nach einem Verdichten mittels Kugelstrahlen der Feder erfolgt.

2. Verfahren nach Anspruch 1,
**dadurch gekennzeichnet,**
**daß** die genannten Oberflächenbereiche in Kreisbewegungen der Kugel oder der Walze um die Achse der Feder relativ zur Feder abrollend verdichtet werden.

3. Verfahren nach einem der Ansprüche 1 oder 2,
**dadurch gekennzeichnet,**
**daß** die daß das abrollende Verdichten bei einer erhöhten Temperatur der Feder von zumindest 180° erfolgt.

4. Verfahren nach einem der Ansprüche 1 bis 3,
**dadurch gekennzeichnet,**
**daß** die Gesamtoberfläche der Feder mittels Kugelstrahlen verdichtet wird und Teiloberflächen der Feder mittels abrollender Verdichtung verdichtet werden.

5. Verfahren nach einem der Ansprüche 1 bis 4,
**dadurch gekennzeichnet,**
**daß** die genannten Oberflächenbereiche bei zumindest elastisch verformter, insbesondere bei flachgedrückter Feder abrollend verdichtet werden.

6. Tellerfeder oder Wellfeder, an der Oberflächenbereiche, die bei Belastung der Feder durch Zugspannungen beansprucht werden, mit einer Druckeigenspannung in der Randschicht versehen sind, hergestellt gemäß dem Verfahren nach einem der Ansprüche 1 bis 5,
**dadurch gekennzeichnet,**
**daß** das Maximum der Druckeigenspannung in der Randschicht von abrollend verdichteten Oberflächenbereichen mindestens 850 MPa beträgt.

7. Feder nach Anspruch 6,
**dadurch gekennzeichnet,**
**daß** die Druckeigenspannung in der Randschicht der abrollend verdichteten Oberflächenbereichen in einer Tiefe von 200 µm mindestens 500 MPa, insbesondere mindestens 700 MPa, vorzugsweise mindestens 1000 MPa beträgt.

8. Feder nach einem der Ansprüche 6 oder 7,
**dadurch gekennzeichnet,**
**daß** zumindest eine der inneren und äußeren Ringkanten (14, 15) mit einer durch abrollendes Verdichten, insbesondere bei verformter Feder, erzeugten Druckeigenspannung in der Randschicht versehen ist.

9. Tellerfeder nach einem der Ansprüche 6 bis 8,
**dadurch gekennzeichnet,**
**daß** zumindest ein Randbereich (16) der innenkonischen Unterseite (12) mit einer durch abrollendes Verdichten, insbesondere bei verformter Feder, erzeugten Druckeigenspannung in der Randschicht versehen ist.

10. Wellfeder nach einem der Ansprüche 6 bis 8,
**dadurch gekennzeichnet,**
**daß** zumindest jeweils ein Randbereich (16, 17) der gewellten oberen und unteren Oberflächen (22, 23) mit einer durch abrollendes Verdichten, insbesondere bei verformter Feder, erzeugten Druckeigenspannung in der Randschicht versehen ist.

11. Tellerfeder nach einem der Ansprüche 6 bis 9,
**dadurch gekennzeichnet,**
**daß** die Tellerfeder (11) an ihrer Innenkante (14) und/oder an ihrer Außenkante (15) geschlitzt bzw. gezahnt ist.

## Claims

1. A method of producing disc springs or undulating springs wherein surface regions, which are subjected to tensile stresses when the spring is under load, are provided with an internal compressive stress in the boundary layer,
**characterised in**
**that** said surface regions are rollingly compacted by a ball or a roller, while tensile stresses are forced on to said surface regions,
wherein rolling compaction is effected after hardening and tempering and after a shot peening compaction of the spring.

2. A method according to claim 1,
**characterised in**
**that** said surface regions are rollingly compacted in circular movements of the ball or roller around the axis of the spring, relative to the spring.

3. A method according to any one of claims 1 or 2,
**characterised in**
**that** the rolling compaction takes place at an increased temperature of the spring of at least 180° C.

4. A method according to any one of claims 1 to 3,
**characterised in**
**that** the total surface of the spring is compacted by shot peening and that partial surfaces of the spring are compacted by rolling compaction.

5. A method according to any one of claims 1 to 4,
**characterised in**
**that** said surface regions are rollingly compacted on an at least elastically deformed spring, more particularly on a flat-pressed spring.

6. A disc spring or an undulating spring wherein surface regions which are subjected to tensile stresses when the spring is under load are provided with an internal compressive stress in the boundary layer, said spring being produced in accordance with the method according to claims 1 to 5,
**characterised in**
**that** the maximum of the internal compressive stress in the boundary layer of rollingly compacted surface regions amounts to at least 850 MPa.

7. A spring according to claim 6,
**characterised in**
**that** the internal compressive stress in the boundary layer of rollingly compacted surface regions at a depth of 200 µm amounts to at least 500 MPa, more particularly to at least 700 MPa, preferably to at least 1000 MPa.

8. A spring according to any one of claims 6 or 7,
**characterised in**
**that** at least one of the inner and outer annular edges (14, 15) is provided, in the boundary layer, with an internal compressive stress generated by rolling compaction, more particularly when the spring is in a deformed condition.

9. A plate spring according to any one of claims 6 to 8,
**characterised in**
**that** at least one boundary region (16) of the internally conical underside (12), is provided with an internal compressive stress in the boundary layer, generated by rolling compaction, more particularly when the spring is in a deformed condition.

10. An undulating spring according to any one of claims 6 to 8,
**characterised in**
**that** at least one boundary region (16, 17) of the undulating upper and lower surfaces (22, 23), is provided with an internal compressive stress in the boundary layer, generated by rolling compaction, more particularly, when the spring is in a deformed condition.

11. A plate spring according to any one of claims 6 to 9,
**characterised in**
**that** the disc spring (11), at its inner edge (14) and/or its outer edge (15), is slotted or toothed.

## Revendications

1. Procédé de fabrication de rondelles-ressort coniques ou de rondelles-ressort ondulées auxquelles on confère, dans des zones de surface, qui, pour un ressort sous charge, sont sollicitées par des contraintes de traction, une contrainte propre de compression dans la couche marginale,
**caractérisé en ce que** les zones de surface citées sont soumises à une compression en y faisant rouler une bille ou un galet, pendant que des contraintes de traction sont imposées de force dans les zones de surface citées, la compression par roulage s'effectue après traitement thermique et après une compression par grenaillage ou microbillage du ressort.

2. Procédé selon la revendication 1,
**caractérisé en ce que** les zones de surface citées sont soumises à une compression en y faisant rouler la bille ou le galet en mouvements circulaires par rapport au ressort, autour de l'axe du ressort.

3. Procédé selon la revendication 1 ou 2,
**caractérisé en ce que** la compression par roulage s'effectue à une température accrue du ressort d'au moins 180 °C.

4. Procédé selon l'une des revendications 1 à 3,
**caractérisé en ce que** l'on soumet la totalité de la surface du ressort à une compression par grenaillage ou microbillage, et l'on soumet des surfaces partielles du ressort à une compression par roulage.

5. Procédé selon l'une des revendications 1 à 4,
**caractérisé en ce que** les zones de surface citées sont soumises à une compression par roulage, sur le ressort au moins déformé élastiquement, et en particulier sur le ressort comprimé à plat.

6. Rondelle-ressort conique ou rondelle-ressort ondulée à laquelle on a conféré, dans des zones de surface, qui, pour un ressort sous charge, sont sollicitées par des contraintes de traction, une contrainte propre de compression dans la couche marginale, lequel fabriquée conformément au procédé selon l'une des revendications 1 à 5,
**caractérisée en ce que** le maximum de la contrainte propre de compression dans la couche marginale de zones de surface ayant été soumises à une compression par roulage, vaut au moins 850 MPa.

7. Ressort selon la revendication 6,
**caractérisé en ce que** la contrainte propre de compression dans la couche marginale des zones de surface ayant subi la compression par roulage présente, à une profondeur de 200 µm, une valeur d'au moins 500 MPa, notamment d'au moins 700 MPa, et de préférence d'au moins 1000 MPa.

8. Ressort selon l'une des revendications 6 ou 7,
**caractérisé en ce qu'**au moins l'un des bords annulaires intérieur et extérieur (14, 15) est doté d'une contrainte propre de compression dans la couche marginale, engendrée par compression par roulage, notamment sur un ressort déformé.

9. Rondelle-ressort conique selon l'une des revendications 6 à 8,
**caractérisée en ce qu'**au moins une zone de bordure (16) de la face inférieure (12) conique intérieure est dotée d'une contrainte propre de compression dans la couche marginale, engendrée par compression par roulage, notamment sur un ressort déformé.

10. Rondelle-ressort ondulée selon l'une des revendications 6 à 8,
**caractérisée en ce qu'**au moins une zone de bordure respective (16, 17) des faces supérieure et inférieure ondulées (22, 23), est dotée d'une contrainte propre de compression dans la couche marginale, engendrée par compression par roulage, notamment sur un ressort déformé.

11. Rondelle-ressort conique selon l'une des revendications 6 à 9,
**caractérisée en ce que** la rondelle-ressort conique (11) est fendue ou dentée sur son bord intérieur (14) et/ou son bord extérieur (15).
